# FASCICULE DE BREVET EUROPEEN

(11) **EP 3 512 108 B1**
(45) Date de publication et mention de la délivrance du brevet: **16.12.2020**
(21) Numéro de dépôt: 19151132.8
(22) Date de dépôt: 10.01.2019
(51) Int. Cl.: H04B 5/00, H04L 7/00, H04L 7/033

(54) **PROCÉDÉ DE SYNCHRONISATION DE SIGNAUX AU SEIN D'UN DISPOSITIF SANS CONTACT COMMUNIQUANT AVEC UN LECTEUR PAR UNE MODULATION ACTIVE DE CHARGE, ET DISPOSITIF CORRESPONDANT**
SIGNALSYNCHRONISIERUNGSVERFAHREN IN EINER VORRICHTUNG, DIE KONTAKTLOS MIT EINEM LESEGERÄT ÜBER EINE AKTIVE MODULATION DER LADUNG KOMMUNIZIERT, UND ENTSPRECHENDE VORRICHTUNG
METHOD FOR SYNCHRONISING SIGNALS WITHIN A CONTACTLESS DEVICE COMMUNICATING WITH A READER BY ACTIVE LOAD MODULATION, AND CORRESPONDING DEVICE

(30) Priorité: 15.01.2018 FR 1850293
(43) Date de publication de la demande: 17.07.2019
(73) Titulaire: STMicroelectronics (Grenoble 2) SAS, 38000 Grenoble (FR)
(72) Inventeur: GRAFFOULIERE, Philippe, 38340 VOREPPE (FR); PAILLE, Bruno, 38360 ENGINS (FR)
(74) Mandataire: Casalonga

(56) Documents cités:
- US-A1- 2016 142 113
- US-A1- 2016 241 384

## Description

Des modes de mise en œuvre et de réalisation de l'invention concernent la communication sans fil ou sans contact utilisant des dispositifs sans contact ou composants électroniques connectés à une antenne, notamment des dispositifs configurés pour échanger des informations avec un lecteur via ladite antenne selon un protocole de communication du type sans contact.

Des modes de mise en œuvre et de réalisation de l'invention concernent plus particulièrement la communication sans contact entre un dispositif sans contact et un lecteur à une fréquence de 13,56 MHz en utilisant une modulation active de charge (ALM : « Active Load Modulation ») pour la communication avec le lecteur et plus particulièrement la synchronisation entre un signal de porteuse lecteur et un signal d'horloge de porteuse généré au sein du dispositif (signal d'horloge de porteuse ALM).

Ces composants ou dispositifs sans contact peuvent être par exemple des composants ou dispositifs dits « NFC » c'est-à-dire des dispositifs compatibles avec la technologie NFC (« Near Field Communication »).

Le dispositif NFC peut être par exemple un circuit intégré ou puce incorporant un microcontrôleur NFC.

L'acronyme NFC désigne une technologie de communication sans fil haute fréquence faible distance, qui permet des échanges de données entre deux dispositifs sans contact sur une faible distance par exemple 10 cm.

La technologie NFC est normalisée dans les documents ISO/IEC 18092, ISO/IEC 21481 et NFC Forum mais incorpore une variété de normes préexistantes incluant les protocoles type A et type B de la norme ISO/IEC 14443.

Un dispositif NFC peut être généralement utilisé soit en mode lecteur ou en mode carte pour dialoguer avec un autre dispositif sans contact, par exemple en utilisant un protocole de communication sans contact tel que le protocole A de la norme ISO/IEC 14443.

Dans le mode carte, le composant NFC se comporte comme un transpondeur, par exemple une carte ou une étiquette, et dialogue avec le dispositif externe qui est un lecteur.

A titre d'exemple non limitatif, le dispositif NFC peut être par exemple incorporé dans un téléphone mobile cellulaire ou une tablette ou tout autre appareil de communication, ce dernier pouvant être utilisé alors, outre sa fonction de communication classique, pour échanger des informations avec le lecteur sans contact.

De nombreuses applications sont ainsi possibles, telles que le franchissement de barrière de péage dans les transports (le téléphone mobile agit comme ticket de transport) ou bien des applications de paiement (le téléphone mobile agit comme carte de crédit).

Le dispositif émulé en mode carte peut être passif ou actif.

Un dispositif passif effectue une modulation de charge du champ magnétique généré par le lecteur.

Un dispositif actif utilise une modulation active de charge (également connue par l'homme du métier sous l'acronyme ALM) pour transmettre les informations vers le lecteur. A cet égard, le dispositif génère également un champ magnétique par l'intermédiaire de son antenne qui simule la modulation de charge du champ du lecteur effectuée par un dispositif passif.

La modulation active de charge est avantageusement utilisée lorsque le signal résultant d'une modulation passive de charge n'est pas assez fort pour être détecté par le lecteur. C'est notamment le cas lorsque l'antenne du dispositif est petite ou située dans un environnement défavorable.

Une fois qu'une carte est détectée par le lecteur, de façon classique et connue en soi, le lecteur initie la communication en modulant le champ magnétique qu'il génère.

Ceci est une phase de réception pour la carte.

Une fois que le lecteur a terminé cette étape, la carte répond en générant son propre champ magnétique et en le modulant au cours de trames de transmission.

Deux situations sont alors possibles.

Dans une première situation, chaque trame peut comporter une succession de rafales (« burst » en langue anglaise) de porteuses ALM séparées par des espaces durant lesquels la carte n'émet aucune information et aucun champ électromagnétique. La durée séparant les instants initiaux de deux rafales consécutives est égale à la période d'une sous porteuse utilisée pour la modulation.

Dans certains cas, la modulation doit être augmentée. Ceci est effectué en générant de façon ininterrompue le champ électromagnétique produit par la carte au cours des trames. C'est la deuxième situation.

Dans cette deuxième situation, en fonction des informations transmises, le champ électromagnétique généré par la carte au cours de la trame peut avoir la même phase ou une phase opposée à celle du champ magnétique généré par le lecteur.

Cela étant, l'amplitude du champ magnétique généré décroît de façon inversement proportionnelle au cube de la distance.

Ainsi, au niveau de l'antenne de la carte, le champ électromagnétique émis par la carte a un niveau bien plus élevé que celui reçu par la carte (qui a été généré par le lecteur) et sur lequel on doit se synchroniser. A titre indicatif, le rapport entre le niveau du champ électromagnétique émis par la carte et celui reçu par la carte (généré par le lecteur) peut aller jusqu'à 60dB.

Dans la première situation (rafales espacées d'espaces au cours de chaque trame de transmission), on peut procéder, au sein de ces espaces, à la synchronisation entre le signal de porteuse généré par le lecteur et le signal d'horloge de porteuse ALM généré par la carte.

Par contre, ceci est actuellement impossible dans la deuxième situation mentionnée ci-avant en raison de la génération continuelle par la carte de son propre champ électromagnétique au cours de chaque trame de transmission.

Aussi dans ce cas, actuellement, on procède à des synchronisations pendant la phase de réception précédant chaque trame de transmission. Il s'agit donc d'une synchronisation faite en dehors des trames. Néanmoins, une telle solution n'est pas satisfaisante.

En effet, l'écart de phase entre le signal de porteuse lecteur et le signal d'horloge ALM augmente au cours de chaque trame et est proportionnel à la longueur de la trame.

Par ailleurs, une telle synchronisation en dehors des trames requiert une référence d'horloge externe ce qui augmente la consommation.

Il existe donc un besoin de proposer une solution différente pour améliorer la synchronisation entre le signal de porteuse lecteur et le signal d'horloge de porteuse dispositif (signal d'horloge de porteuse ALM) lorsque le dispositif génère de façon continue son propre champ électromagnétique au cours de chaque trame de transmission.

La demande US 2016/0142113 A1 divulgue un procédé de communication sans contact entre un lecteur et un dispositif, ledit procédé comprenant un procédé de synchronisation entre le signal de porteuse lecteur et le signal d'horloge de porteuse dispositif.

Pour répondre à ce besoin, il est en particulier proposé d'éliminer autant que possible le champ électromagnétique généré par le dispositif, du signal reçu par l'antenne du dispositif.

Selon un aspect, il est ainsi proposé un procédé de communication sans contact depuis un dispositif, par exemple un téléphone mobile cellulaire ou un appareil de communication émulé en mode carte, vers un lecteur, ladite communication utilisant une modulation active de charge.

Le procédé comprend une transmission de trames depuis le dispositif vers le lecteur, chaque trame étant précédée d'une période de réception durant laquelle un signal lecteur est reçu au niveau de l'antenne du dispositif.

Le procédé selon cet aspect comprend alors en outre, dans chaque période de réception, une première synchronisation entre un signal issu du signal lecteur reçu et un signal d'horloge de porteuse dispositif (le signal de porteuse ALM) généré au sein du dispositif.

Le procédé comprend en outre, au sein de chaque trame :
- une réception au niveau de l'antenne du dispositif, d'un signal de porteuse lecteur et une transmission vers le lecteur via ladite antenne, d'un signal de porteuse dispositif modulé,
- un traitement de suppression du signal de porteuse dispositif modulé effectué sur un signal intermédiaire issu de celui délivré par l'antenne de façon à obtenir un signal traité, et
- une deuxième synchronisation entre le signal traité et le signal d'horloge de porteuse dispositif.

Ainsi, selon cet aspect, on commence la synchronisation avant la trame d'émission dispositif, c'est-à-dire pendant la période de réception durant laquelle seul le signal de porteuse lecteur est reçu, puis on poursuit cette synchronisation durant la trame d'émission dispositif en effectuant un traitement de suppression du signal de porteuse dispositif modulé (c'est-à-dire le signal transmis par la carte mais présent dans la chaîne de réception de celle-ci) de façon à effectuer cette deuxième synchronisation entre un signal débarrassé autant que possible du signal transmis et le signal d'horloge de porteuse dispositif (signal de porteuse ALM) généré au sein du dispositif.

Le signal intermédiaire est en pratique un signal numérique, typiquement issu d'une conversion analogique-numérique d'un signal analogique tiré du signal reçu au niveau de l'antenne, d'une transposition de fréquence de façon à ramener le signal en bande de base et d'une décimation éventuelle.

Le traitement de suppression est alors avantageusement un traitement numérique.

Plusieurs possibilités existent pour mettre en œuvre le traitement de suppression.

Dans une première variante, le traitement de suppression peut utiliser un signal auxiliaire contenant les symboles de modulation du signal de porteuse dispositif modulé.

En effet, ces symboles de modulation sont connus puisque générés par le dispositif lui-même. Et le traitement de suppression utilise alors un algorithme de suppression de bruit, le bruit étant alors ici formé par le signal auxiliaire.

A cet égard, le traitement de suppression peut par exemple comporter un traitement de filtrage adaptatif comportant par exemple une estimation des coefficients du filtre par une méthode des moindres carrés.

Le filtre est avantageusement un filtre du type à réponse impulsionnelle finie.

De façon à accélérer la convergence du traitement de filtrage adaptatif, il est préférable d'initialiser les coefficients du filtre avant le début de chaque trame, par exemple à la fin de la période de réception précédant chaque trame.

L'algorithme de suppression de bruit mentionné ci-avant, qui utilise le signal auxiliaire peut ne pas être efficace dans toutes les situations.

Plus précisément, un tel algorithme de suppression de bruit est plus adapté en particulier pour de forts débits et des protocoles conduisant à un faible bruit de signal.

Par contre, notamment pour des protocoles à bas débit, par exemple le protocole A mentionné ci-avant ayant un débit de 106 kilobits/seconde, et présentant un contenu continu (DC) très important conduisant à un bruit important, il est préférable d'utiliser un algorithme d'autosuppression du signal de transmission.

Ainsi, plus précisément, lorsque le signal de porteuse dispositif est modulé par un signal de modulation périodique, par exemple à une période égale à 16 fois la période de la porteuse (porteuse à 13,56 Mhz), le traitement de suppression comprend une sommation d'au moins une partie du signal intermédiaire avec ladite partie du signal intermédiaire retardé d'un retard égal, selon la séquence des symboles du signal de modulation, à une demi ou une entière période du signal de modulation.

Cet algorithme d'autosuppression opère directement sur le signal d'antenne. Cependant, il requiert la connaissance du signal de modulation pour sélectionner les parties du signal à retarder, typiquement les périodes pendant lesquelles la phase du signal de modulation ne change pas.

Bien entendu, il est tout à fait possible de combiner le traitement de suppression de bruit et le traitement d'autosuppression c'est-à-dire d'effectuer le traitement de suppression de bruit pour certaines parties du signal et le traitement d'autosuppression pour d'autres parties du signal, voire de combiner ces deux traitements (suppression et autosuppression).

Selon un mode de mise en œuvre, le signal intermédiaire est issu d'une conversion analogique-numérique d'un signal analogique issu de celui délivré par l'antenne, et le signal d'horloge de porteuse dispositif (signal de porteuse ALM) est généré à partir d'un signal de sortie d'un oscillateur numériquement commandé (« DCO » : « Digital Control Oscillator ») appartenant à une boucle à verrouillage de phase recevant ledit signal analogique et incorporant un module de traitement mettant en œuvre ledit traitement de suppression. La conversion analogique-numérique est alors effectuée au rythme d'un signal d'horloge auxiliaire issu du signal de sortie de l'oscillateur numériquement commandé.

La première synchronisation, c'est-à-dire celle faite avant chaque trame d'émission durant la période de réception, utilise avantageusement ladite boucle à verrouillage de phase mais avec le traitement de suppression désactivé.

Selon un mode de mise en œuvre, l'oscillateur est commandé par un signal de commande obtenu uniquement à partir du signal de sortie d'un filtre de boucle de ladite boucle à verrouillage de phase. En d'autres termes on commande l'oscillateur directement par le signal de sortie du filtre de boucle sans utiliser de signal d'horloge externe.

En variante, il est également possible d'utiliser optionnellement un signal d'horloge externe et de commander alors l'oscillateur par un signal de commande obtenu à partir du signal d'horloge externe et du signal de sortie du filtre de boucle de la boucle à verrouillage de phase.

Selon un autre aspect il est proposé un dispositif de communication sans contact, apte à communiquer sans contact avec un lecteur en utilisant une modulation active de charge et des trames à destination du lecteur, chaque trame étant précédée d'une période de réception, le dispositif comprenant
une antenne configurée pour durant chaque période de réception, recevoir un signal lecteur, et durant chaque trame, recevoir un signal de porteuse lecteur et transmettre vers le lecteur un signal de porteuse dispositif modulé,
des moyens de traitement configurés pour
effectuer dans chaque période de réception, une première synchronisation entre un signal issu du signal lecteur reçu sur l'antenne et un signal d'horloge de porteuse dispositif généré au sein du dispositif, et
effectuer au sein de chaque trame,
un traitement de suppression du signal de porteuse dispositif modulé effectué sur un signal intermédiaire issu de celui délivré par l'antenne de façon à obtenir un signal traité, et
une deuxième synchronisation entre le signal traité et ledit signal d'horloge de porteuse dispositif.

Selon un mode de réalisation, le signal intermédiaire est un signal numérique et les moyens de traitement comportent un module de traitement configuré pour effectuer le traitement de suppression en numérique.

Selon un mode de réalisation, le module comporte une entrée destinée à recevoir un signal auxiliaire contenant les symboles de modulation du signal de porteuse dispositif modulé.

Selon un mode de réalisation, le module de traitement comporte des moyens de filtrage adaptatif configurés pour estimer les coefficients du filtre selon une méthode des moindres carrés.

Les moyens de traitement comprennent préférentiellement des moyens de commande configurés pour initialiser les coefficients des moyens de filtrage avant le début de chaque trame.

Selon un mode de réalisation, le signal de porteuse dispositif est modulé par un signal de modulation périodique et le module de traitement comprend des moyens de sommation configurés pour effectuer une sommation d'au moins une partie du signal intermédiaire avec ladite partie du signal intermédiaire retardée d'un retard ayant une valeur égale, selon la séquence des symboles du signal de modulation, à une demi ou une entière période du signal de modulation.

Selon un mode de réalisation, les moyens de traitement comprennent
une boucle à verrouillage de phase comportant un convertisseur analogique numérique ayant une entrée connectée à l'antenne et apte à délivrer le signal intermédiaire, ledit module de traitement, et un oscillateur numériquement commandé possédant une sortie apte à délivrer un signal d'oscillateur,
des premiers moyens de génération configurés pour recevoir le signal d'oscillateur et générer un signal d'horloge auxiliaire destiné à cadencer le convertisseur analogique numérique, et
des deuxièmes moyens de génération configurés pour générer le signal d'horloge de porteuse dispositif à partir du signal d'oscillateur.

Selon un mode de réalisation, les moyens de traitement comprennent des premiers moyens de synchronisation configurés pour effectuer la première synchronisation, les premiers moyens de synchronisation comportant ladite boucle à verrouillage de phase et des moyens de commande configurés pour désactiver ledit module de traitement.

Selon un mode de réalisation, la boucle à verrouillage de phase comporte un filtre de boucle configuré pour délivrer un signal de sortie de filtre destiné à commander l'oscillateur numériquement commandé.

Selon un autre mode de réalisation possible, la boucle à verrouillage de phase comporte un filtre de boucle et les moyens de traitement comportent une entrée d'horloge externe destinée à recevoir un signal d'horloge externe, et un bloc de traitement connecté à l'entrée d'horloge externe et à la sortie du filtre de boucle et configuré pour générer un signal de commande à partir du signal d'horloge externe et du signal de sortie du filtre de boucle, le signal de commande étant destiné à commander l'oscillateur numériquement commandé.

Selon un autre aspect il est proposé un appareil hôte incorporant un dispositif tel que défini ci-avant.

Cet appareil hôte peut être en particulier mais non limitativement un transpondeur, ou une carte à puce sans contact, ou un appareil de communication, par exemple une tablette ou un téléphone mobile cellulaire, émulé en mode carte.

D'autres avantages et caractéristiques de l'invention apparaîtront à l'examen de la description détaillée et des dessins annexés, nullement limitatifs, sur lesquels :

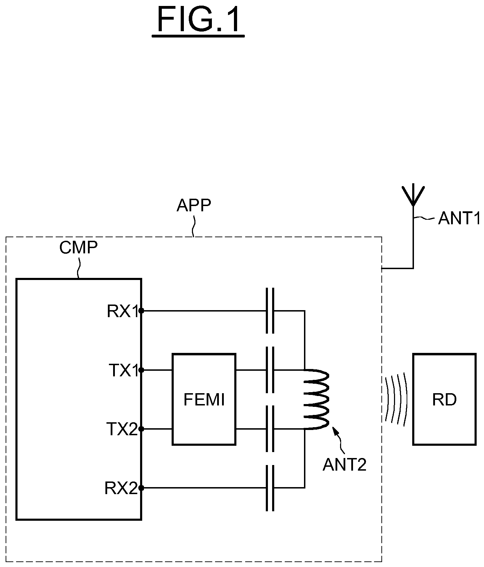

- les figures 1 à 5 illustrent des modes de réalisation et de mise en œuvre de l'invention.

Sur la figure 1, la référence APP désigne un appareil de communication, par exemple un téléphone mobile cellulaire, équipé d'une antenne ANT1 pour l'établissement des communications téléphoniques.

Dans le cas présent, l'appareil APP comporte également un dispositif CMP de communication sans contact, par exemple du type NFC. Ce dispositif peut être par exemple une puce électronique sans contact de type NFC.

On suppose ici que l'appareil hôte APP est émulé en mode carte. Le dispositif CMP possède de façon classique deux contacts TX1 et TX2 et deux autres contacts RX1 et RX2.

Une antenne ANT2, par exemple un enroulement inductif, est utilisable pour la communication sans contact avec un lecteur externe RD.

Une première borne de l'antenne ANT2 est connectée aux contacts TX1 et RX1 tandis que l'autre borne de l'antenne ANT2 est connectée aux contacts TX2 et RX2.

Les contacts TX1 et TX2 forment deux bornes de sortie du dispositif DIS pour l'émission de données vers l'antenne ANT2 tandis que les contacts RX1 et RX2 forment deux bornes d'entrée du dispositif pour la réception de données provenant de l'antenne ANT2.

De façon classique, un circuit externe d'adaptation d'impédance est connecté entre l'antenne ANT2 et le dispositif CMP et, par ailleurs, de façon classique et connue en soi, un filtre FEMI destiné à filtrer les interférences électromagnétiques est connecté entre les contacts TX1, TX2 et l'antenne ANT2.

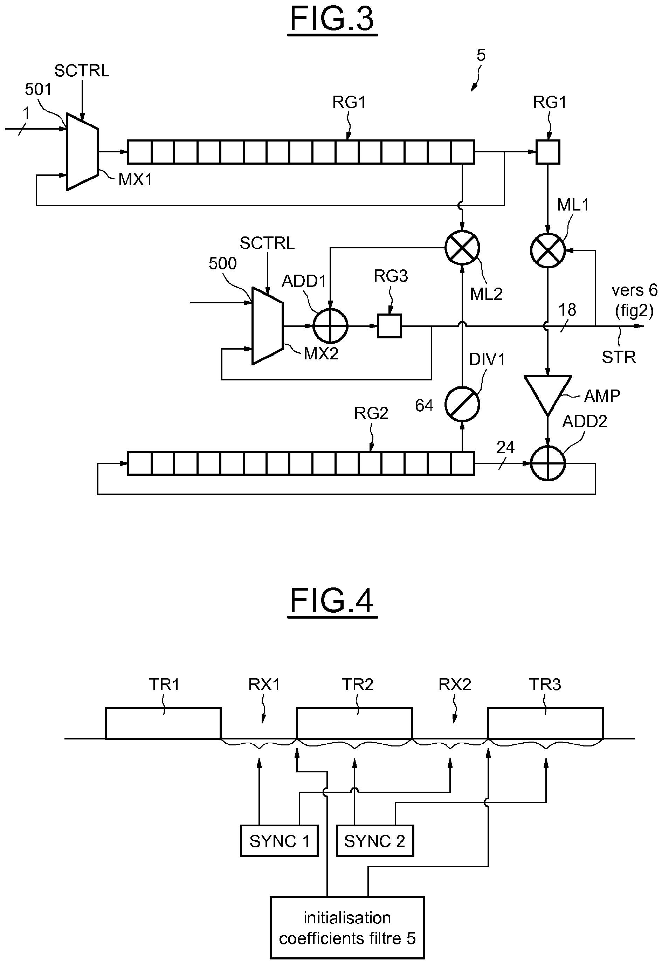

Le dispositif de communication sans contact CMP est apte à communiquer sans contact avec le lecteur RD en utilisant une modulation active de charge et, comme illustré sur la figure 4, à transmettre des trames TR1, TR2, TR3, ... à destination du lecteur RD.

Chaque trame est précédée d'une période de réception RX1, RX2, ...

Durant ces périodes de réception, seul le lecteur RD génère son champ électromagnétique et le module pour transmettre des informations au dispositif qui est alors en phase d'écoute.

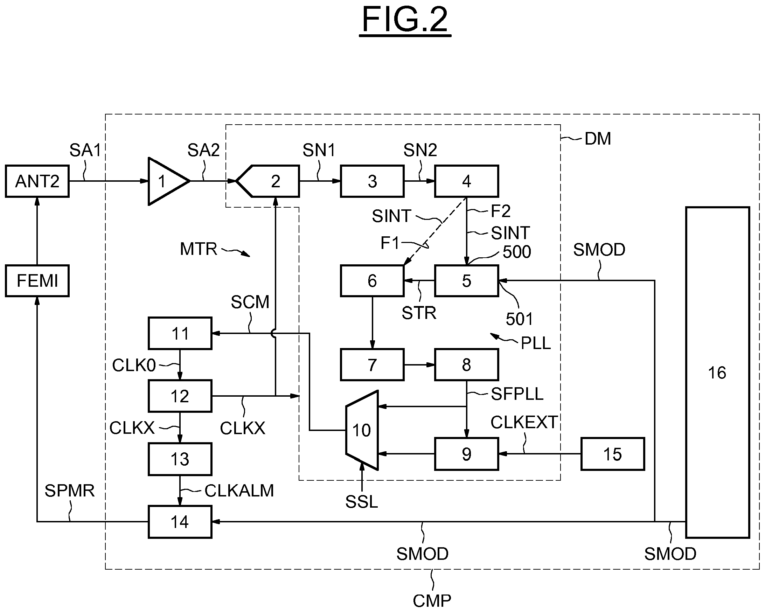

Ainsi, durant chaque période de réception, l'antenne reçoit un signal lecteur SA1 (figure 2).

Durant chaque trame TRi, l'antenne est destinée à recevoir un signal de porteuse lecteur SA1 et à transmettre vers le lecteur un signal de porteuse dispositif modulé SPMR (figure 2).

Par ailleurs, comme illustré sur la figure 2, le dispositif CMP comporte des moyens de traitement MTR configurés pour effectuer une synchronisation entre un signal d'horloge de porteuse dispositif CLKALM, généré au sein du dispositif CMP, et le signal de porteuse lecteur reçu sur l'antenne ANT2.

Plus précisément, les moyens de traitement MTR sont configurés pour
- effectuer dans chaque période de réception RXi une première synchronisation SYNC1 (figure 4) entre un signal SA2 issu du signal lecteur SA1 reçu sur l'antenne ANT2 et le signal d'horloge de porteuse dispositif CLKALM généré au sein du dispositif, et
- effectuer au sein de chaque trame Tri :
   - un traitement de suppression du signal de porteuse dispositif modulé SPMR, ce traitement de suppression étant effectué sur un signal intermédiaire SINT issu de celui délivré par l'antenne ANT2, de façon à obtenir un signal traité STR, et
   - une deuxième synchronisation SYNC2 (figure 4) entre le signal traité STR et le signal d'horloge de porteuse dispositif CLKALM.

Le signal intermédiaire SINT est un signal numérique et les moyens de traitement MTR comportent alors un module de traitement 5 configuré pour effectuer le traitement de suppression en numérique.

Plus précisément, le dispositif DIS comporte un domaine DM cadencé par un signal d'horloge auxiliaire CLKX qui est issu, comme on le verra plus en détail ci-après, du signal de sortie CLKO d'un oscillateur numériquement contrôlé 11.

A titre d'exemple, le signal d'horloge auxiliaire CLKX a une fréquence de 54,24 Mhz tandis que le signal CLKO délivré par l'oscillateur 11 a une fréquence de 868 Mhz.

On rappelle ici que la fréquence du signal de porteuse généré par le lecteur a une fréquence de 13,56 Mhz et que la fréquence du signal d'horloge de porteuse dispositif CLKLM a également une fréquence de 13,56 Mhz.

Les moyens de traitement MTR comportent une boucle à verrouillage de phase PLL dont une entrée est définie par l'entrée d'un convertisseur analogique numérique 2 cadencé au rythme du signal d'horloge auxiliaire CLKX.

Ce convertisseur analogique numérique reçoit un signal analogique SA2 tiré du signal SA1 délivré par l'antenne après par exemple amplification dans un amplificateur 1.

Il convient de noter ici que le signal SA1 est une combinaison du signal de porteuse lecteur généré par le lecteur et du signal de porteuse modulé dispositif SPMR transmis via l'antenne au lecteur durant les trames de transmission.

Le convertisseur analogique numérique 2 délivre un signal numérique SN1 qui subit une transposition en bande de base dans un étage 3 de structure classique et connue en soi, par exemple un dérotateur 13,56 Mhz.

Le signal SN2 est donc un signal numérique en bande de base.

Ce signal SN2 subit une décimation (sous-échantillonnage) dans un bloc décimateur 4 de façon par exemple à ne conserver qu'un échantillon sur 16.

On obtient alors en sortie du bloc décimateur 4 le signal intermédiaire SINT sur lequel le module 5 va effectuer le traitement de suppression qui est ici un algorithme de suppression de bruit.

Dans cet exemple, le bruit est formé par le signal de modulation SMOD qui est reçu sur une entrée auxiliaire 501 du module 5 alors que le signal SINT est reçu sur l'entrée principale 500.

En effet, en pratique, le signal de porteuse modulé dispositif SPMR qui va être transmis au lecteur via l'antenne après passage dans le filtre FEMI est un signal modulé par le signal de modulation SMOD qui comporte des symboles de modulation +1 -1 délivrés au rythme d'une fréquence d'une sous-porteuse (847,5 KHz dans le cas présent).

En pratique, à chaque fois que le symbole de modulation vaut 1, la phase du signal CLKALM est inchangée tandis que lorsque le symbole de modulation vaut -1, la phase est inversée.

Le signal de modulation SMOD est délivré de façon classique par un processeur 16 qui effectue par ailleurs le traitement des symboles reçus et provenant du signal de porteuse du lecteur.

On se réfère maintenant plus particulièrement à la figure 3 pour décrire une architecture possible du module de traitement 5.

Cette architecture implémente un filtrage adaptatif utilisant la méthode des moindres carrés récursifs pour l'estimation des coefficients du filtre.

Le filtre décrit ici est un filtre du type à réponse impulsionnelle finie.

L'entrée auxiliaire 501, qui reçoit les symboles du signal de modulation SMOD en bande de base (symboles composés de +1 et de -1) est connectée, par l'intermédiaire d'un multiplexeur MX1 commandé par un signal de contrôle SCTRL, à un premier registre à décalage RG1, ici un registre de 16 bits, destiné à stocker les symboles successifs.

Chaque symbole de modulation est délivré au premier registre RG1 au rythme de la fréquence de la sous-porteuse.

Le filtre 5 comporte également un deuxième registre à décalage RG2, également de 16 bits, destiné à stocker les coefficients du filtre mis à jour au fur et à mesure de leur estimation par la méthode des moindres carrés.

La sortie du registre RG2 est rebouclée sur l'entrée de ce même registre RG2 par l'intermédiaire d'un additionneur ADD2 qui reçoit par ailleurs la sortie d'un amplificateur AMP, destiné à amplifier le gain de l'erreur des moindres carrés. L'entrée de l'amplificateur est connectée à la seizième bascule du registre RG1 par l'intermédiaire d'un multiplieur ML1 qui reçoit par ailleurs l'erreur des moindres carrés, cette erreur correspondant à la sortie du filtre.

La sortie du registre RG2 est par ailleurs connectée à une première entrée d'un multiplieur ML2 qui reçoit par ailleurs la sortie de la quinzième bascule du registre RG1.

La sortie du multiplieur est connectée à une première entrée d'un additionneur ADD1 qui reçoit par ailleurs la sortie d'un multiplexeur MX2 dont une première entrée forme l'entrée principale 500 du filtre (celle qui reçoit les échantillons du signal intermédiaire SINT).

La sortie de l'additionneur ADD1 est connectée à un troisième registre RG3 (registre à 18 bits) qui est d'une part connecté à la sortie du filtre et qui donc délivre le signal STR, et qui est d'autre part rebouclé sur la deuxième entrée du multiplexeur MX2.

La sortie du filtre délivre donc le signal traité STR qui, après convergence du filtre, est débarrassé autant que possible du signal SPMR transmis au lecteur et qui se retrouve dans la chaîne de réception au niveau de l'antenne ANT2.

Puisque le signal auxiliaire CLKX, qui est issu du signal de sortie CLKO de l'oscillateur 11, cadence le convertisseur analogique numérique 2, et que le signal d'horloge porteuse CLKALM est lui-même généré à partir de ce signal CLKO, la boucle à verrouillage de phase PLL va viser à asservir la valeur de la phase du signal de porteuse lecteur à une valeur constante.

A cet égard, la boucle à verrouillage de phase PLL comporte en sortie du module de suppression 5 un filtre passe-bas 6 suivi d'un module d'estimation de la phase, par exemple un module du type CORDIC, bien connu de l'homme du métier.

Ce module d'estimation 7 délivre en sortie une valeur de phase constante à un filtre de boucle 8 de structure classique et connue en soi.

La sortie du filtre de boucle 8 est connectée à une première entrée d'un multiplexeur 10 dont la sortie délivre un signal de commande SCM visant à commander l'oscillateur 11.

Le multiplexeur 10 est commandé par un signal de sélection SSL.

Lorsque la sortie du filtre de boucle 8 est effectivement reliée à la sortie du multiplexeur 10, le signal de commande SCM est le signal de sortie du filtre de boucle.

Cela étant, il est possible également de prévoir une horloge externe 15 qui délivre un signal d'horloge externe CLKEXT.

En effet, en fonction des caractéristiques de l'oscillateur 11, les spécifications de bande passante de la boucle à verrouillage de phase peuvent être contraignantes. L'utilisation d'un signal d'horloge externe permet de concilier à la fois ces exigences élevées en termes de bande passante avec la volonté de limiter préférentiellement la quantité de bruit dans l'estimation effectuée par la boucle à verrouillage de phase.

En effet, dans ce cas, le bruit haute fréquence de l'oscillateur est compensé par la boucle à verrouillage de phase qui utilise le signal d'horloge externe CLKEXT tandis que le bruit basse fréquence de l'oscillateur est compensé par la boucle à verrouillage de phase qui utilise la phase du signal SINT.

A cet égard, un bloc 9 reçoit le signal SFPLL de sortie du filtre de boucle 8 et le signal d'horloge externe CLKEXT et combine ces deux signaux pour former le signal de commande SCM de l'oscillateur.

Plus précisément, le bloc 9 génère le signal de commande configuré pour commander l'oscillateur 11 de sorte qu'il génère le signal CLKO ayant une fréquence égale à α.f_{CLKEXT,} où α est un nombre non entier et F_{CLKEXT} est la fréquence du signal d'horloge externe CLKEXT. Dans l'exemple d'implémentation décrit ici, la valeur nominale de α est égale à (64^{∗}13.56MHz)/f_{CLKEXT}.

Le signal SFPLL est utilisé pour déplacer le point de fonctionnement de la boucle à verrouillage de phase et ajuster en continu la valeur de α afin d'asservir la phase du signal SINT.

Les ajustements de α s'effectuent à un rythme largement inférieur à celui requis pour le pilotage de l'oscillateur 11 directement par le signal de sortie du filtre de boucle SFPLL. Le bruit admissible sur le signal SINT lors de ce pilotage de l'oscillateur 11 utilisant la combinaison de l'horloge externe et du signal SFPLL est alors bien plus important (augmentation de l'ordre de 20 à 30dB) que dans le cas d'un pilotage direct de l'oscillateur 11 par le signal SFPLL. L'atténuation tolérée sur le signal lecteur bénéficie directement de ce gain. En d'autres termes cette atténuation peut être plus importante que dans le cas d'un pilotage direct de l'oscillateur 11 par le signal SFPLL.

Comme indiqué ci-avant, le signal d'horloge auxiliaire CLKX est obtenu à partir du signal de sortie CLKO de l'oscillateur 11 après passage dans un premier diviseur 12.

Le signal CLKX est ensuite délivré à un deuxième diviseur 13 de façon à obtenir le signal d'horloge de porteuse dispositif CLKALM ayant la fréquence de 13,56 Mhz et synchronisé en phase avec le signal de porteuse lecteur.

Un bloc 14, de structure classique et connue en soi, reçoit alors le signal de modulation SMOD et le signal CLKALM et délivre, après inversion ou non de phase du signal CLKALM en fonction de la valeur du symbole de modulation reçu, le signal de porteuse modulé dispositif SPMR qui va être transmis au lecteur via le filtre FEMI et l'antenne ANT2.

Comme illustré sur la figure 4, afin d'accélérer la convergence du filtre de suppression 5, il est préférable d'initialiser les coefficients du filtre 5 avant le début de chaque trame de transmission TRi. Cette initialisation peut être effectuée par des moyens de commande incorporés dans le processeur 16.

Par ailleurs, pour effectuer la première synchronisation SYNC1, on peut avantageusement utiliser la même boucle à verrouillage de phase PLL que celle qui a été décrite en référence à la figure 2 mais en désactivant le module de suppression 5 puisque dans ce cas, il n'y a pas de transmission de données et donc de génération de champ électromagnétique par le dispositif au cours de chaque période de réception RXi.

Ceci est illustré par la flèche en pointillés F1 sur la figure 2.

La flèche F2 est propre à la synchronisation SYNC2.

Au sens de l'invention, une désactivation du module de filtrage peut s'entendre tout simplement par un court-circuit du module 5 ou alors par une initialisation de celui-ci (en annulant les coefficients du filtre adaptatif). Cette désactivation peut être également effectuée par les moyens de commande incorporés dans le processeur 16.

Dans certains cas, l'algorithme de suppression de bruit décrit précédemment peut être insuffisant. C'est le cas en particulier lorsque le signal de la boucle à verrouillage de phase est très bruité par exemple lorsqu'on utilise un protocole type A à 106 kbits par seconde.

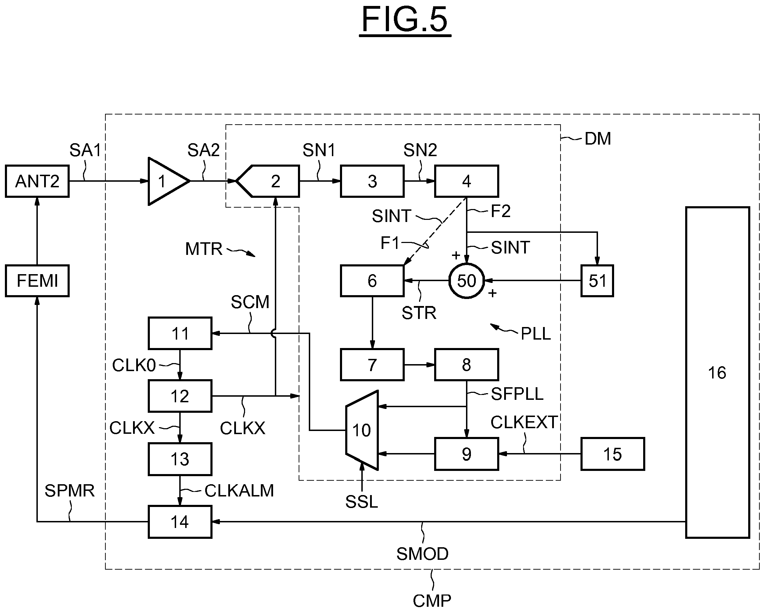

Dans ce cas, il est préférable d'utiliser un algorithme d'autosuppression du signal transmis dont une implémentation est illustrée sur la figure 5.

Sur cette figure, tous les éléments analogues ou ayant des fonctions analogues à ceux décrits en référence à la figure 2 portent les mêmes références. Seules les différences entre ces deux figures seront maintenant décrites.

Dans ce mode de réalisation, le module de suppression 5 de la figure 2 est remplacé par un sommateur 50 qui va sommer le signal intermédiaire SINT avec le signal intermédiaire SINT retardé d'un retard 51 égal à une fraction de la période du signal de modulation SMOD.

Ainsi, par exemple lorsqu'on utilise un signal résultant d'un protocole type A ou B utilisant une sous-porteuse de 848 kHz, le signal de modulation comporte plusieurs séquences du type -1-1, 1,1, -1-1, 1,1, -1-1, 1,1, -1-1 (à 4^{∗}848kHz).

Et, en sommant cette séquence avec elle-même, retardée d'une demi-période de la sous-porteuse, on obtient une suppression de cette séquence. Cependant, cette autosuppression n'est possible que durant des périodes pendant lesquelles la phase de la sous-porteuse ne change pas.

Ainsi, en sommant le signal SINT avec lui-même mais retardé d'une demi-période de la sous-porteuse, on obtient, après un temps de convergence qui peut être déterminé lors d'un étalonnage du système, en sortie de l'additionneur 50 une suppression du signal SPMR transmis vers le lecteur.

Si par exemple on utilise un débit de 848 kbits par seconde, un bit contient alors une seule période de sous-porteuse. Quand les bits émis se répètent, plusieurs périodes de sous porteuse de même phase se succèdent. On peut alors sommer le signal SINT avec lui-même décalé d'une demi-période de la sous-porteuse.

Quand les bits émis sont une succession de {0,1}, le signal n'a plus une période égale à celle de la sous-porteuse, mais une période double. L'autosuppression du signal modulé dans le signal SINT s'obtient alors en décalant le signal intermédiaire SINT d'une période entière de sous-porteuse avant de le sommer avec lui-même.

Les symboles du signal de modulation SMOD permettent d'identifier les parties du signal de transmission qui sont éligibles à l'autosuppression, et de déterminer s'il convient de décaler le signal SINT d'une demi ou d'une période entière de sous-porteuse.

Ce procédé peut être appliqué à un signal de type F défini dans la norme JIS X6319-4, signal qui peut être vu comme une modulation de sous-porteuse dont la période est égale à la période symbole.

## Revendications

1. Procédé de communication sans contact depuis un dispositif vers un lecteur utilisant une modulation active de charge, comprenant une transmission de trames (TRi) depuis le dispositif vers le lecteur, chaque trame étant précédée d'une période de réception (RXi) durant laquelle un signal lecteur est reçu au niveau d'une antenne du dispositif, le procédé comprenant en outre dans chaque période de réception une première synchronisation (SYNC1) entre un signal issu du signal lecteur reçu (SA1) et un signal d'horloge de porteuse dispositif (CLKALM) généré au sein du dispositif, le procédé comprenant en outre au sein de chaque trame (TRi),
une réception au niveau de l'antenne du dispositif, d'un signal de porteuse lecteur (SA1) et une transmission vers le lecteur via ladite antenne, d'un signal de porteuse dispositif modulé (SPMR),
un traitement numérique de suppression (5) du signal de porteuse dispositif modulé (SPMR) effectué sur un signal intermédiaire numérique (SINT) issu de celui délivré par l'antenne et utilisant un signal auxiliaire (SMOD) contenant les symboles de modulation du signal de porteuse dispositif modulé, de façon à obtenir un signal traité (STR), et
une deuxième synchronisation (SYNC2) entre le signal traité (STR) et ledit signal d'horloge de porteuse dispositif (CLKALM).

2. Procédé selon la revendication 1, dans lequel le traitement de suppression comprend un traitement de filtrage adaptatif (5) comportant une estimation des coefficients du filtre par une méthode des moindres carrés.

3. Procédé selon la revendication 2, dans lequel on initialise les coefficients du filtre (5) avant le début de chaque trame (TRi).

4. Procédé de communication sans contact depuis un dispositif vers un lecteur utilisant une modulation active de charge, comprenant une transmission de trames (TRi) depuis le dispositif vers le lecteur, chaque trame étant précédée d'une période de réception (RXi) durant laquelle un signal lecteur est reçu au niveau d'une antenne du dispositif, le procédé comprenant en outre dans chaque période de réception une première synchronisation (SYNC1) entre un signal issu du signal lecteur reçu (SA1) et un signal d'horloge de porteuse dispositif (CLKALM) généré au sein du dispositif, le procédé comprenant en outre au sein de chaque trame (TRi),
une réception au niveau de l'antenne du dispositif, d'un signal de porteuse lecteur (SA1) et une transmission vers le lecteur via ladite antenne, d'un signal de porteuse dispositif (SPMR) modulé par un signal de modulation périodique,
un traitement numérique de suppression (5) du signal de porteuse dispositif modulé (SPMR) effectué sur un signal intermédiaire numérique (SINT) issu de celui délivré par l'antenne et comportant une sommation (50) d'au moins une partie du signal intermédiaire avec ladite partie du signal intermédiaire retardée d'un retard (51) égal, selon la séquence des symboles émis, à une demi ou une entière période du signal de modulation, de façon à obtenir un signal traité (STR), et
une deuxième synchronisation (SYNC2) entre le signal traité (STR) et ledit signal d'horloge de porteuse dispositif (CLKALM).

5. Procédé selon l'une des revendications précédentes, dans lequel le signal intermédiaire (SINT) est issu d'une conversion analogique numérique (2) d'un signal analogique (SA2) issu de celui (SA1) délivré par l'antenne, et le signal d'horloge de porteuse dispositif (CLKALM) est généré à partir d'un signal de sortie (CKLO) d'un oscillateur numériquement commandé (11) appartenant à une boucle à verrouillage de phase (PLL) recevant ledit signal analogique (SA2) et incorporant un module de traitement (5) mettant en œuvre ledit traitement de suppression, la conversion analogique numérique étant effectuée au rythme d'un signal d'horloge auxiliaire (CLKX) issu du signal de sortie de l'oscillateur numériquement commandé.

6. Procédé selon la revendication 5, dans lequel la première synchronisation (SYNC1) utilise ladite boucle à verrouillage de phase (PLL) avec le traitement de suppression (5) désactivé.

7. Procédé selon l'une des revendications 5 ou 6, dans lequel l'oscillateur (11) est commandé par un signal de commande (SCM) obtenu uniquement à partir du signal de sortie (SFPLL) d'un filtre de boucle (8) de ladite boucle à verrouillage de phase (PLL).

8. Procédé selon l'une des revendications 5 ou 6, dans lequel l'oscillateur (11) est commandé par un signal de commande (SCM) obtenu à partir d'un signal d'horloge externe (CLKEXT) et du signal de sortie (SFPLL) d'un filtre de boucle (8) de ladite boucle à verrouillage de phase (PLL).

9. Dispositif de communication sans contact, apte à communiquer sans contact avec un lecteur (RD) en utilisant une modulation active de charge et des trames (TRi) à destination du lecteur, chaque trame (TRi) étant précédée d'une période de réception (RXi), le dispositif (CMP) comprenant
une antenne (ANT2) configurée pour durant chaque période de réception, recevoir un signal lecteur, et durant chaque trame, recevoir un signal de porteuse lecteur et transmettre vers le lecteur un signal de porteuse dispositif modulé,
des moyens de traitement (MTR) configurés pour effectuer dans chaque période de réception, une première synchronisation entre un signal issu du signal lecteur reçu sur l'antenne et un signal d'horloge de porteuse dispositif généré au sein du dispositif, et
effectuer au sein de chaque trame,
un traitement de suppression du signal de porteuse dispositif modulé effectué sur un signal intermédiaire numérique (SINT) issu de celui délivré par l'antenne de façon à obtenir un signal traité, et
une deuxième synchronisation entre le signal traité et ledit signal d'horloge de porteuse dispositif,
les moyens de traitement comportant un module de traitement (5) configuré pour effectuer le traitement de suppression en numérique sur le signal intermédiaire numérique, le module de traitement possédant une entrée (501) destinée à recevoir, en vue de son utilisation, un signal auxiliaire (SMOD) contenant les symboles de modulation du signal de porteuse dispositif modulé.

10. Dispositif selon la revendication 9, dans lequel le module de traitement comporte des moyens de filtrage adaptatif (5) configurés pour estimer les coefficients du filtre selon une méthode des moindres carrés.

11. Dispositif selon la revendication 10, comprenant en outre des moyens de commande (16) configurés pour initialiser les coefficients des moyens de filtrage avant le début de chaque trame.

12. Dispositif de communication sans contact, apte à communiquer sans contact avec un lecteur (RD) en utilisant une modulation active de charge et des trames (TRi) à destination du lecteur, chaque trame (TRi) étant précédée d'une période de réception (RXi), le dispositif (CMP) comprenant
une antenne (ANT2) configurée pour durant chaque période de réception, recevoir un signal lecteur, et durant chaque trame, recevoir un signal de porteuse lecteur et transmettre vers le lecteur un signal de porteuse dispositif modulé par un signal de modulation périodique,
des moyens de traitement (MTR) configurés pour effectuer dans chaque période de réception, une première synchronisation entre un signal issu du signal lecteur reçu sur l'antenne et un signal d'horloge de porteuse dispositif généré au sein du dispositif, et
effectuer au sein de chaque trame,
un traitement de suppression du signal de porteuse dispositif modulé effectué sur un signal intermédiaire numérique (SINT) issu de celui délivré par l'antenne de façon à obtenir un signal traité, et
une deuxième synchronisation entre le signal traité et ledit signal d'horloge de porteuse dispositif, les moyens de traitement comportant un module de traitement (5) configuré pour effectuer le traitement de suppression en numérique sur le signal intermédiaire numérique, le module de traitement possédant, pour effectuer le traitement de suppression, 2. des moyens de sommation (50) configurés pour effectuer une sommation d'au moins une partie du signal intermédiaire avec ladite partie du signal intermédiaire retardée d'un retard ayant une valeur égale, selon la séquence des symboles émis, à une demi ou une entière période du signal de modulation.

13. Dispositif selon l'une des revendications 9 à 12, dans lequel les moyens de traitement (MTR) comprennent
une boucle à verrouillage de phase (PLL) comportant un convertisseur analogique numérique (2) ayant une entrée connectée à l'antenne (ANT2) et apte à délivrer le signal intermédiaire, ledit module de traitement (5) et un oscillateur numériquement commandé (11) possédant une sortie apte à délivrer un signal d'oscillateur,
des premiers moyens de génération (12) configurés pour recevoir le signal d'oscillateur et générer un signal d'horloge auxiliaire (CLKX) destiné à cadencer le convertisseur analogique numérique, et
des deuxièmes moyens de génération (12, 13) configurés pour générer le signal d'horloge de porteuse dispositif (CLKALM) à partir du signal d'oscillateur.

14. Dispositif selon la revendication 13, dans lequel les moyens de traitement comprennent des premiers moyens de synchronisation configurés pour effectuer la première synchronisation, les premiers moyens de synchronisation comportant ladite boucle à verrouillage de phase (PLL) et des moyens de commande (16) configurés pour désactiver ledit module de traitement (5).

15. Dispositif selon l'une des revendications 13 ou 14, dans lequel la boucle à verrouillage de phase (PLL) comporte un filtre de boucle (8) configuré pour délivrer un signal de sortie de filtre (SFPLL) destiné à commander l'oscillateur numériquement commandé (11).

16. Dispositif selon l'une des revendications 13 ou 14, dans lequel la boucle à verrouillage de phase (PLL) comporte un filtre de boucle (8) et les moyens de traitement comportent une entrée d'horloge externe destinée à recevoir un signal d'horloge externe (CLKEXT), et un bloc de traitement (9) connecté à l'entrée d'horloge externe et à la sortie du filtre de boucle et configuré pour générer un signal de commande (SCM) à partir du signal d'horloge externe et du signal de sortie du filtre de boucle, le signal de commande étant destiné à commander l'oscillateur numériquement commandé (11).

17. Appareil hôte incorporant un dispositif (CMP) selon l'une des revendications 9 à 16.

18. Appareil hôte selon la revendication 17, étant un transpondeur, ou une carte à puce sans contact, ou un appareil de communication, par exemple une tablette ou un téléphone mobile cellulaire, émulé en mode carte.

## Patentansprüche

1. Kontaktloses Kommunikationsverfahren von einer Vorrichtung zu einem Lesegerät unter Verwendung einer aktiven Ladungsmodulation, umfassend eine Übertragung von Rastern (TRi) von der Vorrichtung zu dem Lesegerät, wobei jedem Raster eine Empfangsperiode (RXi) vorangeht, in der ein Lesegerätesignal im Bereich einer Antenne der Vorrichtung empfangen wird, wobei das Verfahren weiter in jeder Empfangsperiode eine erste Synchronisation (SYNC1) zwischen einem Signal, das aus dem empfangenen Lesegerätesignal (SA1) stammt, und einem Vorrichtungsträgertaktsignal (CLKALM) umfasst, das innerhalb der Vorrichtung erzeugt wird, wobei das Verfahren weiter innerhalb jedes Rasters (TRi) umfasst,
einen Empfang, im Bereich der Antenne der Vorrichtung, eines Lesegeräteträgersignals (SA1) und eine Übertragung eines modulierten Vorrichtungsträgersignals (SPMR) über die Antenne zum Lesegerät,
eine digitale Löschverarbeitung (5) des modulierten Vorrichtungsträgersignals (SPMR), die an einem digitalen Zwischensignal (SINT) durchgeführt wird, welches aus jenem stammt, das von der Antenne abgegeben wird, und unter Verwendung eines Hilfssignals (SMOD), das die Modulationssymbole des modulierten Vorrichtungsträgersignals enthält, um ein verarbeitetes Signal (STR) zu erhalten, und
eine zweite Synchronisation (SYNC2) zwischen dem verarbeiteten Signal (STR) und dem Vorrichtungsträgertaktsignal (CLKALM).

2. Verfahren nach Anspruch 1, wobei die Löschverarbeitung eine adaptive Filterungsverarbeitung (5) umfasst, welche eine Schätzung der Koeffizienten des Filters durch eine Methode der kleinsten Quadrate beinhaltet.

3. Verfahren nach Anspruch 2, wobei die Koeffizienten des Filters (5) vor Beginn jedes Rasters (TRi) initialisiert werden.

4. Kontaktloses Kommunikationsverfahren von einer Vorrichtung zu einem Lesegerät unter Verwendung einer aktiven Ladungsmodulation, umfassend eine Übertragung von Rastern (TRi) von der Vorrichtung zu dem Lesegerät, wobei jedem Raster eine Empfangsperiode (RXi) vorangeht, in der ein Lesegerätesignal im Bereich einer Antenne der Vorrichtung empfangen wird, wobei das Verfahren weiter in jeder Empfangsperiode eine erste Synchronisation (SYNC1) zwischen einem Signal, das aus dem empfangenen Lesegerätesignal (SA1) stammt, und einem Vorrichtungsträgertaktsignal (CLKALM) umfasst, das innerhalb der Vorrichtung erzeugt wird, wobei das Verfahren weiter innerhalb jedes Rasters (TRi) umfasst,
einen Empfang, im Bereich der Antenne der Vorrichtung, eines Lesegeräteträgersignals (SA1) und eine Übertragung zum Lesegerät, über die Antenne, eines Vorrichtungsträgersignals (SPMR), das durch ein periodisches Modulationssignal moduliert wird,
eine digitale Löschverarbeitung (5) des modulierten Vorrichtungsträgersignals (SPMR), die an einem digitalen Zwischensignal (SINT) durchgeführt wird, das aus jenem stammt, das von der Antenne abgegeben wird, und eine Summierung (50) mindestens eines Teils des Zwischensignals mit dem Teil des Zwischensignals beinhaltet, das um eine Verzögerung (51) verzögert ist, die gemäß der Sequenz der ausgegebenen Symbole, gleich einer halben oder einer ganzen Periode des Modulationssignals ist, um ein verarbeitetes Signal (STR) zu erhalten, und
eine zweite Synchronisation (SYNC2) zwischen dem verarbeiteten Signal (STR) und dem Vorrichtungsträgertaktsignal (CLKALM).

5. Verfahren nach einem der vorstehenden Ansprüche, wobei das Zwischensignal (SINT) aus einer Analog-Digital-Umwandlung (2) eines analogen Signals (SA2) stammt, das aus jenem (SA1) stammt, das von der Antenne abgegeben wird, und das Vorrichtungsträgertaktsignal (CLKALM) aus einem Ausgangssignal (CKLO) eines digital gesteuerten Oszillators (11) erzeugt wird, der einer Phasenverriegelungsschleife (PLL) angehört, die das analoge Signal (SA2) empfängt, und ein Verarbeitungsmodul (5) beinhaltet, das die Löschverarbeitung umsetzt, wobei die Analog-Digital-Umwandlung im Rhythmus eines Hilfstaktsignals (CLKX) durchgeführt wird, das aus dem Ausgangssignal des digital gesteuerten Oszillators stammt.

6. Verfahren nach Anspruch 5, wobei die erste Synchronisation (SYNC1) die Phasenverriegelungsschleife (PLL) mit der deaktivierten Löschverarbeitung (5) verwendet.

7. Verfahren nach einem der Ansprüche 5 oder 6, wobei der Oszillator (11) durch ein Steuersignal (SCM) gesteuert wird, das nur aus dem Ausgangssignal (SFPLL) eines Schleifenfilters (8) der Phasenverriegelungsschleife (PLL) erhalten wird.

8. Verfahren nach einem der Ansprüche 5 oder 6, wobei der Oszillator (11) durch ein Steuersignal (SCM) gesteuert wird, das aus einem externen Taktsignal (CLKEXT) und dem Ausgangssignal (SFPLL) eines Schleifenfilters (8) der Phasenverriegelungsschleife (PLL) erhalten wird.

9. Kontaktlose Kommunikationsvorrichtung, die imstande ist, kontaktlos, unter Verwendung einer aktiven Ladungsmodulation und von Rastern (TRi) zu dem Lesegerät mit einem Lesegerät (RD) zu kommunizieren, wobei jedem Raster (TRi) eine Empfangsperiode (RXi) vorangeht, wobei die Vorrichtung (CMP) umfasst
eine Antenne (ANT2), die konfiguriert ist, um in jeder Empfangsperiode ein Lesegerätesignal zu empfangen, und in jedem Raster ein Lesegeräteträgersignal zu empfangen und zu dem Lesegerät ein moduliertes Vorrichtungsträgersignal zu übertragen,
Verarbeitungsmittel (MTR), konfiguriert zum Durchführen, in jeder Empfangsperiode, einer ersten Synchronisation zwischen einem Signal, das aus dem Lesegerätesignal stammt, das an der Antenne empfangen wird, und einem Vorrichtungsträgertaktsignal, das innerhalb der Vorrichtung erzeugt wird, und
Durchführen, innerhalb jedes Rasters,
einer Löschverarbeitung des modulierten Vorrichtungsträgersignals, die auf einem digitalen Zwischensignal (SINT) ausgeführt wird, welches aus jenem stammt, das von der Antenne abgegeben wird, um ein verarbeitetes Signal zu erhalten, und
eine zweite Synchronisation zwischen dem verarbeiteten Signal und dem Vorrichtungsträgertaktsignal,
wobei die Verarbeitungsmittel ein Verarbeitungsmodul (5) beinhalten, das konfiguriert ist, um die Löschverarbeitung digital an dem digitalen Zwischensignal durchzuführen, wobei das Verarbeitungsmodul einen Eingang (501) besitzt, der dazu bestimmt ist, ein Hilfssignal (SMOD), welches die Modulationssymbole des modulierten Vorrichtungsträgersignals enthält, in Hinblick auf dessen Verwendung zu empfangen.

10. Vorrichtung nach Anspruch 9, wobei das Verarbeitungsmodul Mittel zur adaptiven Filterung (5) beinhaltet, die konfiguriert sind, um die Koeffizienten des Filters gemäß einer Methode der kleinsten Quadrate zu schätzen.

11. Vorrichtung nach Anspruch 10, weiter Steuermittel (16) umfassend, die konfiguriert sind, um die Koeffizienten der Filterungsmittel vor Beginn jedes Rasters zu initialisieren.

12. Kontaktlose Kommunikationsvorrichtung, die imstande ist, kontaktlos, unter Verwendung einer aktiven Ladungsmodulation und von Rastern (TRi) zu dem Lesegerät mit einem Lesegerät (RD) zu kommunizieren, wobei jedem Raster (TRi) eine Empfangsperiode (RXi) vorangeht, wobei die Vorrichtung (CMP) umfasst
eine Antenne (ANT2), die konfiguriert ist, um in jeder Empfangsperiode, ein Lesegerätesignal zu empfangen, und in jedem Raster ein Lesegeräteträgersignal zu empfangen, und zu dem Lesegerät ein moduliertes Vorrichtungsträgersignal durch ein periodisches Modulationssignal zu übertragen,
Verarbeitungsmittel (MTR), die konfiguriert sind zum Durchführen, in jeder Empfangsperiode, einer ersten Synchronisation zwischen einem Signal, das aus dem Lesegerätesignal stammt, das an der Antenne empfangen wird, und einem Vorrichtungsträgertaktsignal, das innerhalb der Vorrichtung erzeugt wird, und
Durchführen innerhalb jedes Rasters,
einer Löschverarbeitung des modulierten Vorrichtungsträgersignals, welche auf einem digitalen Zwischensignal (SINT) durchgeführt wird, welches aus jenem stammt, das von der Antenne abgegeben wird, um ein verarbeitetes Signal zu erhalten, und
eine zweite Synchronisation zwischen dem verarbeiteten Signal und dem Vorrichtungsträgertaktsignal,
Verarbeitungsmittel, die ein Verarbeitungsmodul (5) beinhalten, das konfiguriert ist, um die Löschverarbeitung digital auf dem digitalen Zwischensignal durchzuführen, wobei das Verarbeitungsmodul zum Durchführen der Löschverarbeitung Summierungsmittel (50) besitzt, die konfiguriert sind, um eine Summierung mindestens eines Teils des Zwischensignals mit dem Teil des Zwischensignals durchzuführen, welches um eine Verzögerung verzögert ist, die gemäß der Sequenz der ausgegebenen Symbole, einen Wert gleich einer halben oder einer ganzen Periode des Modulationssignals aufweist.

13. Vorrichtung nach einem der Ansprüche 9 bis 12, wobei die Verarbeitungsmittel (MTR) umfassen
eine Phasenverriegelungsschleife (PLL), die einen Analog-Digital-Wandler (2) beinhaltet, der einen mit der Antenne (ANT2) verbundenen Eingang aufweist, und imstande ist, das Zwischensignal abzugeben, wobei das Verarbeitungsmodul (5) und ein digital gesteuerter Oszillator (11) einen Ausgang besitzen, der imstande ist, ein Oszillatorsignal abzugeben,
erste Erzeugungsmittel (12), die konfiguriert sind, um das Oszillatorsignal zu empfangen und ein Hilfstaktsignal (CLKX) zu erzeugen, das dazu bestimmt ist, den Analog-Digital-Wandler zu kadenzieren, und
zweite Erzeugungsmittel (12,13), die konfiguriert sind, um das Vorrichtungsträgertaktsignal (CLKALM) aus dem Oszillatorsignal zu erzeugen.

14. Vorrichtung nach Anspruch 13, wobei die Verarbeitungsmittel erste Synchronisationsmittel umfassen, die konfiguriert sind, um die erste Synchronisation durchzuführen, wobei die ersten Synchronisationsmittel die Phasenverriegelungsschleife (PLL) und Steuermittel (16) beinhalten, die konfiguriert sind, um das Verarbeitungsmodul (5) zu deaktivieren.

15. Vorrichtung nach einem der Ansprüche 13 oder 14, wobei die Phasenverriegelungsschleife (PLL) einen Schleifenfilter (8) beinhaltet, der konfiguriert ist, um ein Filterausgangssignal (SFPLL) abzugeben, das dazu bestimmt ist, den digital gesteuerten Oszillator (11) zu steuern.

16. Vorrichtung nach einem der Ansprüche 13 oder 14, wobei die Phasenverriegelungsschleife (PLL) einen Schleifenfilter (8) beinhaltet und die Verarbeitungsmittel einen externen Takteingang beinhalten, der dazu bestimmt ist, ein externes Taktsignal (CLKEXT) zu empfangen, und einen Verarbeitungsblock (9), der mit dem externen Takteingang und mit dem Schleifenfilterausgang verbunden ist, und konfiguriert ist, um ein Steuersignal (SCM) aus dem externen Taktsignal und dem Ausgangssignal des Schleifenfilters zu erzeugen, wobei das Steuersignal dazu bestimmt ist, den digital gesteuerten Oszillator (11) zu steuern.

17. Host-Gerät, das eine Vorrichtung (CMP) nach einem der Ansprüche 9 bis 16 einschließt.

18. Host-Gerät nach Anspruch 17, wobei es ein Transponder, oder eine kontaktlose Chipkarte, oder ein Kommunikationsgerät, beispielsweise ein Tablet-Computer oder ein mobiles Funktelefon ist, das im Kartenmodus emuliert ist.

## Claims

1. Method of contactless communication from a device to a reader using an active load modulation, comprising a transmission of frames (TRi) from the device to the reader, each frame being preceded by a reception period (RXi) during which a reader signal is received at an antenna of the device, the method further comprising in each reception period a first synchronisation (SYNC1) between a signal emanating from the reader signal received (SA1) and a device carrier clock signal (CLKALM) generated within the device, the method further comprising within each frame (TRi),
a reception at the antenna of the device, of a reader carrier signal (SA1) and a transmission to the reader via said antenna, of a modulated carrier device signal (SPMR),
a digital suppression processing (5) of the modulated carrier device signal (SPMR) carried out on a digital intermediate signal (SINT) emanating from the one delivered by the antenna and using an auxiliary signal (SMOD) containing the modulation symbols of the modulated carrier device signal, in such a way as to obtain a processed signal (STR), and
a second synchronisation (SYNC2) between the processed signal (STR) and said device carrier clock signal (CLKALM).

2. Method according to claim 1, wherein the suppression processing comprises an adaptive filtering processing (5) including an estimation of the coefficients of the filter by a least squares method.

3. Method according to claim 2, wherein the coefficients of the filter (5) are initialised before the beginning of each frame (TRi).

4. Method of contactless communication from a device to a reader using an active load modulation, comprising a transmission of frames (TRi) from the device to the reader, each frame being preceded by a reception period (RXi) during which a reader signal is received at an antenna of the device, the method further comprising in each reception period a first synchronisation (SYNC1) between a signal emanating from the reader signal received (SA1) and a device carrier clock signal (CLKALM) generated within the device, the method further comprising within each frame (TRi),
a reception at the antenna of the device, of a reader carrier signal (SA1) and a transmission to the reader via said antenna, of a device carrier signal (SPMR) modulated by a periodic modulation signal,
a digital suppression processing (5) of the modulated carrier device signal (SPMR) carried out on a digital intermediate signal (SINT) emanating from the one delivered by the antenna and including a summation (50) of at least one portion of the intermediate signal with said portion of the intermediate signal delayed by a delay (51) equal, according to the sequence of the symbols emitted, to one-half or one full period of the modulation signal, in such a way as to obtain a processed signal (STR), and
a second synchronisation (SYNC2) between the processed signal (STR) and said device carrier clock signal (CLKALM).

5. Method according to one of the preceding claims, wherein the intermediate signal (SINT) emanates from an analogue-to-digital conversion (2) of an analogue signal (SA2) emanating from the one (SA1) delivered by the antenna, and the device carrier clock signal (CLKALM) is generated from an output signal (CKLO) of a digitally controlled oscillator (11) belonging to a phase-locked loop (PLL) receiving said analogue signal (SA2) and incorporating a processing module (5) implementing said suppression processing, with the analogue-to-digital conversion being carried out at the rhythm of an auxiliary clock signal (CLKX) emanating from the output signal of the digitally controlled oscillator.

6. Method according to claim 5, wherein the first synchronisation (SYNC1) uses said phase-locked loop (PLL) with the suppression processing (5) deactivated.

7. Method according to one of claims 5 or 6, wherein the oscillator (11) is controlled by a control signal (SCM) obtained solely from the output signal (SFPLL) of a loop filter (8) of said phase-locked loop (PLL).

8. Method according to one of claims 5 or 6, wherein the oscillator (11) is controlled by a control signal (SCM) obtained from an external clock signal (CLKEXT) and from the output signal (SFPLL) of a loop filter (8) of said phase-locked loop (PLL).

9. Device for contactless communication, able to communicate without contact with a reader (RD) by using an active load modulation and frames (TRi) intended for the reader, with each frame (TRi) being preceded by a reception period (RXi), the device (CMP) comprising
an antenna (ANT2) configured for during each reception period, receiving a reader signal, and during each frame, receiving a reader carrier signal and transmitting a modulated device carrier signal to the reader,
processing means (MTR) configured to carry out in each reception period, a first synchronisation between a signal emanating from the reader signal received on the antenna and a device carrier clock signal generated within the device, and
carry out within each frame,
a suppression processing of the modulated carrier device signal carried out on a digital intermediate signal (SINT) emanating from the one delivered by the antenna in such a way as to obtain a processed signal, and
a second synchronisation between the processed signal and said device carrier clock signal,
the processing means including a processing module (5) configured to carry out the suppression processing digitally on the digital intermediate signal, the processing module having an input (501) intended to receive, for the purposes of the use thereof, an auxiliary signal (SMOD) containing the modulation symbols of the modulated carrier device signal.

10. Device according to claim 9, wherein the processing module includes adaptive filtering means (5) configured to estimate the coefficients of the filter according to a least squares method.

11. Device according to claim 10, further comprising control means (16) configured to initialise the coefficients of the filtering means before the beginning of each frame.

12. Device for contactless communication, able to communicate without contact with a reader (RD) by using an active load modulation and frames (TRi) intended for the reader, with each frame (TRi) being preceded by a reception period (RXi), the device (CMP) comprising
an antenna (ANT2) configured for during each reception period, receiving a reader signal, and during each frame, receiving a reader carrier signal and transmitting to the reader a device carrier signal modulated by a periodic modulation signal,
processing means (MTR) configured to carry out in each reception period, a first synchronisation between a signal emanating from the reader signal received on the antenna and a device carrier clock signal generated within the device, and
carry out within each frame,
a suppression processing of the modulated carrier device signal carried out on a digital intermediate signal (SINT) emanating from the one delivered by the antenna in such a way as to obtain a processed signal, and
a second synchronisation between the processed signal and said device carrier clock signal,
the processing means including a processing module (5) configured to carry out the suppression processing digitally on the digital intermediate signal, the processing module having, in order to carry out the suppression processing, means of summation (50) configured to carry out a summation of at least one portion of the intermediate signal with said portion of the intermediate signal delayed by a delay having a value equal, according to the sequence of the symbols emitted, to one-half or one full period of the modulation signal.

13. Device according to one of claims 9 to 12, wherein the processing means (MTR) comprise
a phase-locked loop (PLL) including an analogue-to-digital converter (2) that has an input connected to the antenna (ANT2) and able to deliver the intermediate signal, said processing module (5) and a digitally controlled oscillator (11) having an output able to deliver an oscillator signal,
first means of generation (12) configured to receive the oscillator signal and generate an auxiliary clock signal (CLKX) intended to clock the analogue-to-digital converter, and
second means of generation (12, 13) configured to generate the device carrier clock signal (CLKALM) from the oscillator signal.

14. Device according to claim 13, wherein the processing means comprise first means of synchronisation configured to carry out the first synchronisation, with the first means of synchronisation including said phase-locked loop (PLL) and control means (16) configured to deactivate said processing module (5).

15. Device according to one of claims 13 or 14, wherein the phase-locked loop (PLL) includes a loop filter (8) configured to deliver a filter output signal (SFPLL) intended to control the digitally controlled oscillator (11).

16. Device according to one of claims 13 or 14, wherein the phase-locked loop (PLL) includes a loop filter (8) and the processing means include an external clock input intended to receive an external clock signal (CLKEXT), and a processing block (9) connected to the external clock input and to the output of the loop filter and configured to generate a control signal (SCM) from the external clock signal and from the output signal of the loop filter, with the control signal being intended to control the digitally controlled oscillator (11).

17. Host apparatus incorporating a device (CMP) according to one of claims 9 to 16.

18. Host apparatus according to claim 17, being a transponder, or a contactless chip card, or a communication apparatus, for example a tablet or a mobile cellular telephone, emulated in card mode.
